# FASCICULE DE BREVET EUROPEEN

(11) **EP 1 135 724 B1**
(45) Date de publication et mention de la délivrance du brevet: **19.02.2003**
(21) Numéro de dépôt: 99956126.9
(22) Date de dépôt: 23.11.1999
(51) Int. Cl.: G06F 9/46, G06F 12/02, G07B 17/04

(54) **DISPOSITIF ET PROCEDE DE PROTECTION CONTRE LE DEBORDEMENT DE PILE DANS UNE MEMOIRE ET MACHINE A AFFRANCHIR LES METTANT EN OEUVRE**
VORRICHTUNG UND VERFAHREN ZUM SCHUTZ GEGEN STAPELÜBERLAUF IN EINEM SPEICHER UND DAZUGEHÖRIGE FRANKIERMASCHINE
DEVICE AND METHOD FOR PROTECTION AGAINST STACK OVERFLOW AND FRANKING MACHINE USING SAME

(30) Priorité: 24.11.1998 FR 9814773
(43) Date de publication de la demande: 26.09.2001
(73) Titulaire: SECAP, 92100 Boulogne Billancourt (FR); Ascom Autelca AG, 3018 Bern-Bumpliz (CH)
(72) Inventeur: DERY, Jean-Marc, F-92600 Asnières (FR); L'HOTE, Frédéric, F-75015 Paris (FR)
(74) Mandataire: Rinuy, Santarelli
(86) Numéro de dépôt international: FR9902884
(87) Numéro de publication internationale: WO00031633

(56) Documents cités:
- US-A- 5 771 348
- J. RICHTER: "Advanced Windows 3rd Edition" 1997 XP002114288 page 224 -page 231 page 118 -page 121
- "Dynamic stack management inn multi-tasking multi-threaded operating systems" IBM TDB, vol. 34, no. 4b, septembre 1991 (1991-09), XP000189488

## Description

La présente invention se rapporte à un dispositif et un procédé de protection contre le débordement de pile dans une mémoire et une machine à affranchir les mettant en oeuvre.

Elle s'applique en particulier aux machines à affranchir dotées d'un programme s'exécutant dans un environnement multi-tâches et plus généralement à la protection de données sensibles.

Dans une machine à affranchir, certaines tâches mettent en oeuvre des montants représentant des sommes d'argent. L'exécution correcte de chacune de ces tâches d'un programme doit être garantie. On entend par exécution correcte, le fait qu'une tâche s'exécute dans sa pile. La pile d'une tâche correspond à un espace mémoire qui lui est réservé. En d'autres termes, l'invention vise à empêcher que des données sensibles ne soient altérées ou modifiées de manière inopportune. Il est donc indispensable de garantir qu'aucune pile ne déborde au delà de l'espace mémoire qui lui a été alloué.

L'ouvrage de J. RICHTER intitulé "Advanced Windows 3^{rd} Edition" publié en 1997 décrit aux chapitres 5 et 7 une architecture de mémoire dans laquelle certaines zones sont réservées.

En particulier, en page 227 de cet ouvrage, il est indiqué que la page inférieure (en anglais "bottommost") d'une zone de pile mémoire est toujours réservée, à des fins de protection contre un écrasement (en anglais "overwriting") accidentel d'autres données.

Toutefois, l'exécution des tâches risque d'être perturbée dans son ensemble par des exceptions résultant des débordements de pile, ce qui peut conduire à une altération indésirable de données sensibles.

Par ailleurs, dans les programmes multi-tâches utilisant des mémoires électroniques actuellement connus, aucune certification de non-débordement de pile d'une tâche n'est prévue.

A cet effet, la présente invention vise à placer, dans l'espace mémoire servant aux piles des tâches, la pile comportant les données les plus sensibles à la position la plus en amont, par rapport au sens de déplacement d'un pointeur dans une pile.

Ainsi, même si une autre pile déborde, son pointeur ne peut atteindre la pile qui contient les données les plus sensibles.

Selon un premier aspect, la présente invention vise un procédé de protection de données sensibles contre le débordement de pile, espace mémoire réservé à une partie d'un programme, caractérisé en ce qu'il comporte une opération d'attribution de pile à chaque partie de programme, au cours de laquelle la pile la plus en amont, par rapport au sens de déplacement d'un pointeur dans une pile, est attribuée à une tâche opérant sur lesdites données sensibles.

Ainsi, si une autre pile déborde, c'est dans le sens amont vers aval que des données peuvent être perturbées, sans risquer de perturber les données sensibles.

En particulier, les données sensibles peuvent être représentatives de sommes d'argent.

Selon des caractéristiques particulières, ledit procédé comporte l'exécution d'une tâche unique opérant sur lesdites données sensibles.

Selon un deuxième aspect, la présente invention vise un dispositif de protection de données sensibles contre le débordement de pile, espace mémoire réservé à une partie d'un programme, caractérisé en ce qu'il comporte un moyen d'attribution de pile à chaque partie de programme, adapté à attribuer la pile la plus en amont, par rapport au sens de déplacement d'un pointeur dans une pile, à une tâche opérant sur lesdites données sensibles.

L'invention vise, aussi, une machine à affranchir, caractérisée en ce qu'elle comporte un dispositif tel que succinctement exposé ci-dessus.

L'invention vise aussi :
- un moyen de stockage d'informations lisible par un ordinateur ou un microprocesseur conservant des instructions d'un programme informatique caractérisé en ce qu'il permet la mise en oeuvre du procédé de l'invention telle que succinctement exposée ci-dessus, et
- un moyen de stockage d'informations amovible, partiellement ou totalement, et lisible par un ordinateur ou un microprocesseur conservant des instructions d'un programme informatique caractérisé en ce qu'il permet la mise en oeuvre du procédé de l'invention telle que succinctement exposée ci-dessus.

Ce dispositif, cette machine à affranchir et ces moyens de stockage présentant les mêmes avantages que le procédé succinctement exposé ci-dessus, ceux-ci ne sont pas rappelés ici.

D'autres avantages, buts et caractéristiques ressortiront de la description qui va suivre, faite en regard des dessins annexés dans lesquels :
- la figure 1 représente, une machine à affranchir mettant en oeuvre le dispositif et le procédé de détection de débordement de pile objets de la présente invention,
- la figure 2 représente, schématiquement, un circuit électronique incorporé dans la machine à affranchir illustrée en figure 1, et
- les figures 3A et 3B représentent une organisation de mémoire conforme à la présente invention, respectivement avant et après un débordement de pile.

La machine à affranchir 1 illustrée sur les dessins comporte un dispositif pour imprimer, sur un objet plat tel que la lettre 2, d'une part, une marque d'affranchissement et, éventuellement, une adresse de destination de l'enveloppe.

Pour imprimer la marque d'affranchissement sur l'emplacement normalisé prévu à cet effet, il faut faire passer la lettre 2 dans un couloir 5 que comporte la machine 1, ce couloir étant délimité par des éléments solidaires du bâti, respectivement un support de glissement 6 qui forme le plafond du couloir 5, une table 7 qui en forme le plancher et une rampe qui en forme une limite latérale, le couloir étant ouvert à l'opposé de cette rampe.

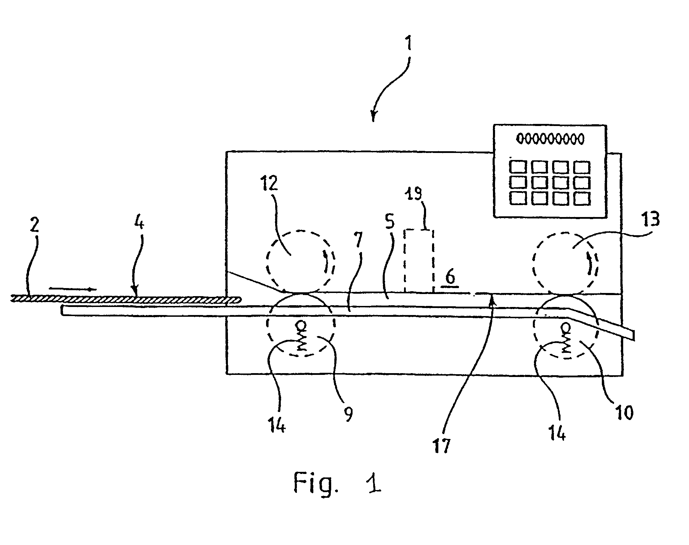

Pour faire passer la lettre 2 dans le couloir 5, on pose la lettre sur la partie de la table 7 qui est en saillie du côté prévu pour l'introduction (côté que l'on voit à gauche en figure 1) puis on fait rentrer la lettre dans le couloir 5, comme montré en figure 1, jusqu'à ce qu'elle soit entraînée par les moyens prévus à cet effet dans la machine 1, l'impression de la marque d'affranchissement s'effectuant automatiquement pendant que la lettre 2 est entraînée dans le couloir 5, la lettre affranchie étant expulsée de la machine à l'autre extrémité du couloir 5 (extrémité que l'on voit à droite en figure 1).

Pour entraîner la lettre 2, la machine 1 comporte deux galets 9 et 10 passant chacun au travers d'une ouverture de la table 7, et deux contre-galets 12 et 13, respectivement pour le galet 9 et pour le galet 10, passant au travers d'une ouverture du support 6.

Les galets 9 et 10 sont montés à rotation par rapport au bâti de la machine 1, par l'intermédiaire de moyens de suspension 14 montrés schématiquement sur la figure 1.

Les contre-galets 12 et 13 sont montés à rotation sur le bâti de la machine 1, sans être suspendus par rapport à celui-ci. Un moteur électrique non représenté sert à entraîner en rotation synchrone les contre-galets 12 et 13, par exemple par l'intermédiaire d'une courroie (non représentée) qui tourne autour de trois pignons portés respectivement par le moteur, par le contre-galet 12 et par le contre-galet 13.

Etant donné que les moyens de suspension 14 sollicitent les galets 9 et 10 vers le support 6, et donc vers les contre-galets 12 et 13, les galets 9 et 10 sont entraînés par friction sur les contre-galets 12 et 13, directement ou par l'intermédiaire d'un objet, tel que la lettre 2, en cours de passage dans la machine 1.

La lettre 2, lorsqu'elle est introduite dans le couloir 5 comme montré sur la figure 1, finit par rencontrer le galet 9 puis le contre-galet 12 qui l'entraîne dans le sens indiqué sur la figure 1 par la flèche horizontale orientée de gauche à droite. Simultanément, le galet 9 s'abaisse tandis que la lettre 2 s'introduit entre les galets 9 et 12 de sorte que la lettre 2 progresse dans la machine 1 avec sa face à imprimer 4 qui est plaquée et qui glisse contre la surface 17 du support de glissement 6.

Pour imprimer la marque d'affranchissement à l'emplacement normalisé qui lui correspond et/ou l'adresse de destination à l'emplacement normalisé qui lui correspond, la machine 1 comporte des moyens d'impression 19 montrés très schématiquement sur la figure 1.

D'une façon générale, les moyens d'impression 19 déposent la marque d'affranchissement pendant que la lettre 2 ou l'objet à affranchir circule dans la machine 1 avec sa face à imprimer qui est plaquée contre la surface 17 du support de glissement 6, les moyens 19 étant situés entre les contre-galets 12 et 13.

Dans l'exemple illustré, les moyens d'impression 19 sont montés directement sur le bâti de la machine, et sont donc fixes par rapport au support de glissement 6.

Afin que les moyens d'impression 19 soient commandés en synchronisme avec l'avancement de l'objet dans la machine, il est prévu un détecteur de présence de l'objet (non représenté) qui déclenche un processus d'impression se déroulant automatiquement.

Plus précisément, il existe un premier détecteur de présence qui commande la mise en route du moteur (non représenté) lorsqu'un objet commence à être introduit dans la machine 1, et un deuxième détecteur de présence (non représenté) qui déclenche le processus d'impression lorsque l'objet est parvenu à un emplacement prédéterminé.

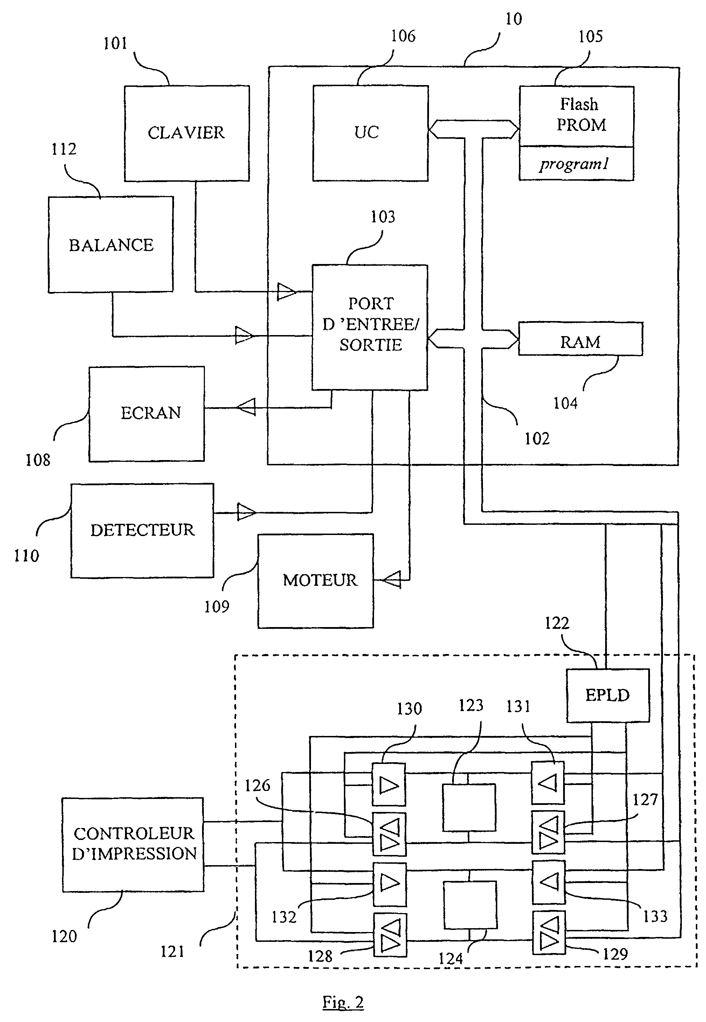

En figure 2, est représenté un circuit électronique de commande du dispositif tel que présenté en figure 1. Ce circuit est illustré sous forme de schéma synoptique et représenté sous référence générale 100. Il comporte, reliés entre eux par un bus d'adresses et de données 102 :
- une unité centrale de traitement 106 ;
- une mémoire vive RAM 104 ;
- une mémoire morte flash PROM 105 ;
- un port d'entrée sortie 103 servant à recevoir :
   - le poids de l'objet postal à affranchir, et
   - la détection de l'objet postal par chacun des détecteurs (non représentés aux figures)
et à transmettre :
- des signaux de commande de moteurs, et
et, indépendamment du bus 102 :
- des moteurs pas-à-pas 109 ;
- des détecteurs de présence 110 ;
- un écran de visualisation 108 relié au port d'entrée/sortie 103 ;
- une balance 112 reliée au port d'entrée/sortie 103 et fournissant des octets représentatifs du poids d'un objet postal ; et
- un clavier 101 relié au port d'entrée/sortie 103 et fournissant des octets représentatifs des touches de clavier successivement utilisées.

Chacun des éléments illustrés en figure 2 est bien connu de l'homme du métier des circuits à microprocesseur et, plus généralement, des systèmes de traitement de l'information. Ces éléments ne sont donc pas décrits ici.

La mémoire vive 104 conserve des données, des variables et des résultats intermédiaires de traitement, dans des registres de mémoire portant, dans la suite de la description, les mêmes noms que les données dont ils conservent les valeurs. La mémoire vive 104 comporte notamment des registres conservant des informations représentatives du poids de l'objet postal à affranchir, le format de l'objet postal en cours de traitement, le nombre d'objets postaux dans le lot en cours de traitement, des valeurs de compteurs ascendant et descendant qui correspondent à des montants d'affranchissement déjà déposés et restant à déposer avant le rechargement de la machine. Ces derniers registres fonctionnent selon des techniques connues dans le domaine des machines à affranchir (au cours de chaque affranchissement, lorsque le montant du compteur descendant est supérieur au montant de la marque d'affranchissement à déposer, il est décrémenté du montant de cette marque et le compteur ascendant est incrémenté du même montant).

La mémoire morte 105 est adaptée à conserver le programme de fonctionnement de l'unité centrale de traitement 106, dans un registre "*program1*", et les données nécessaires au fonctionnement de ce programme.

En fait, la mémoire dite "morte" 105 est une mémoire réinscriptible qui ne s'efface pas lorsque le dispositif est éteint. Elle n'est réinscriptible que selon des procédures sécurisées et seulement par certaines personnes habilitées, si bien que, pour l'utilisateur quotidien, elle apparaît comme une mémoire morte.

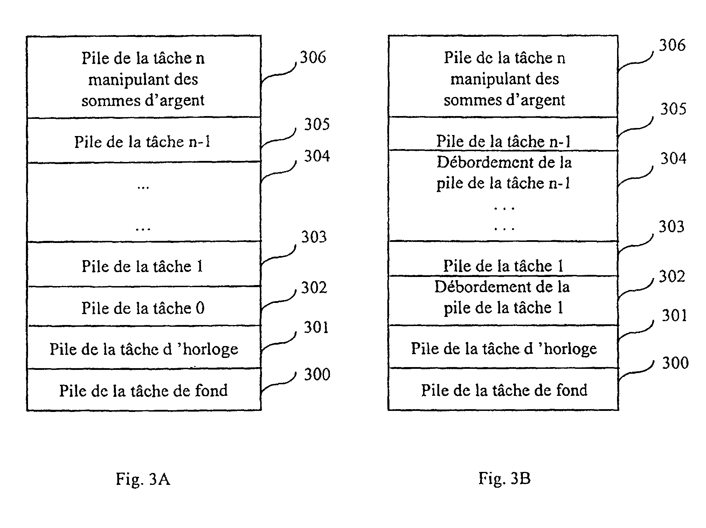

L'unité centrale de traitement 106 est adaptée à mettre en oeuvre le programme conservé en mémoire morte 105 et à organiser la mémoire vive 104, conformément à la figure 3A.

Le programme ou logiciel de la machine à affranchir est un logiciel multitâche, ce qui implique une allocation, par le processeur, d'un espace mémoire, ou pile, associé à chaque tâche. Cet espace mémoire est contenu dans la mémoire vive 104.

Dans le tableau suivant, on a représenté, dans l'ordre des adresses mémoires décroissantes, l'ensemble des piles mises en oeuvre par le programme, conformément à l'état de la technique antérieure :
pile de la tâche n
pile de la tâche n-1
.
.
.
pile de la tâche 1
pile de la tâche 0
pile de la tâche d'horloge
pile de la tâche de fond

On observe que, c'est dans le sens vertical descendant que se déplacent les pointeurs de pile, quand on empile, lit ou écrit dans les piles.

On comprend aisément que si une pile déborde, c'est-à-dire si une tâche effectue une écriture en dehors de la pile qui lui est attribuée, une autre pile, placée en aval dans le sens vertical descendant, est perturbée et l'ensemble du fonctionnement de la machine à affranchir est perturbé.

Dans le cas des machines à affranchir, des valeurs conservées dans ces piles représentent des valeurs "sensibles", comme des sommes d'argent. Il est donc indispensable de garantir l'inviolabilité des piles.

Conformément à la présente invention, dans le mode de réalisation décrit et représenté :
- la pile qui est allouée à la tâche qui manipule des données sensibles, ici des sommes d'argent est placée à l'adresse la plus élevée, un pointeur se déplaçant dans une pile dans le sens des adresses décroissantes, et
- une tâche unique manipule des données représentatives de sommes d'argent.

Cette tâche unique est celle qui, au cours de chaque affranchissement, vérifie que le montant du compteur descendant est supérieur au montant de la marque d'affranchissement à déposer, et, dans l'affirmative, elle décrémente ce compteur descendant du montant de cette marque et incrémente le compteur ascendant du même montant.

A cet effet, on effectue une opération d'attribution de pile à chaque partie de programme, au cours de laquelle la pile la plus en amont, par rapport au sens de déplacement d'un pointeur dans une pile, est attribuée à une tâche opérant sur lesdites données sensibles.

Ensuite, on fixe l'adresse de début de pile pour chaque autre tâche de l'application.

Dans le tableau suivant, correspondant à la figure 3A, on a représenté, dans l'ordre des adresses mémoires décroissantes, l'ensemble des piles mises en oeuvre par le programme, conformément à la présente invention :
pile de la tâche n, manipulant des données représentatives de sommes d'argent
pile de la tâche n-1
.
.
.
pile de la tâche 1
pile de la tâche 0
pile de la tâche d'horloge
pile de la tâche de fond

A titre d'exemple, dans le tableau suivant, correspondant à la figure 3B, on a représenté, dans l'ordre des adresses mémoires décroissantes, l'ensemble des piles mises en oeuvre par le programme, lorsque les piles des tâches n-1 et 1 débordent :
pile de la tâche n
pile de la tâche n-1
pile de la tâche n-2 comportant un débordement de la pile de la tâche n-1.
.
.
pile de la tâche 1
pile de la tâche 0 comportant un débordement de la pile de la tâche 1
pile de la tâche d'horloge
pile de la tâche de fond

On observe que le débordement des piles ne risque pas d'atteindre les données sensibles, qui sont dans la pile de la tâche n.

## Revendications

1. Procédé de protection de données sensibles contre le débordement de pile (300 à 305), espace mémoire réservé à une partie d'un programme, **caractérisé en ce qu'**il comporte une opération d'attribution de pile à chaque partie de programme, au cours de laquelle la pile la plus en amont (306), par rapport au sens de déplacement d'un pointeur dans une pile, est attribuée à une tâche opérant sur lesdites données sensibles.

2. Procédé selon la revendication 1, **caractérisé en ce qu'**il comporte l'exécution d'une tâche unique opérant sur lesdites données sensibles.

3. Dispositif de protection de données sensibles contre le débordement de pile (300 à 305), espace mémoire réservé à une partie d'un programme, **caractérisé en ce qu'**il comporte un moyen d'attribution de pile à chaque partie de programme (106), adapté à attribuer la pile la plus en amont (306), par rapport au sens de déplacement d'un pointeur dans une pile, à une tâche opérant sur lesdites données sensibles.

4. Dispositif selon la revendication 3, **caractérisé en ce qu'**il comporte un moyen de traitement de données (106) adapté à exécuter une unique tâche opérant sur lesdites données sensibles.

5. Machine à affranchir (1), **caractérisée en ce qu'**elle comporte un dispositif selon l'une quelconque des revendications 3 ou 4.

## Claims

1. A method of protecting sensitive data against overflow of a stack (300 to 305), i.e. of a memory space reserved for a part of a program, **characterized in that** it includes an operation of allocating stack to each program part, during which operation the most upstream stack (306), relative to the direction of movement of the pointer in a stack, is allocated to a task operating on said sensitive data.

2. A method according to claim 1, **characterized in that** it includes the execution of a single task operating on said sensitive data.

3. A system for protecting sensitive data against overflow of a stack (300 to 305), i.e. of a memory space reserved for a part of a program, **characterized in that** it includes means for allocating stack to each program part (106) adapted to allocate the most upstream stack (306), relative to the direction of movement of a pointer in a stack, to a task operating on said sensitive data.

4. A system according to claim 3, **characterized in that** it includes data processing means (106) adapted to execute a single task operating on said sensitive data.

5. A franking machine (1) **characterized in that** it includes a system according to either claim 3 or claim 4.

## Patentansprüche

1. Verfahren zum Schutz von sensiblen Daten gegen das Überlaufen eines Stapels (300 bis 305), mit einem reservierten Speicherplatz für einen Teil eines Programmes, **dadurch gekennzeichnet, dass** es in jedem Teil des Programmes eine Stapelzuordnungsoperation umfaßt, in deren Verlauf der oberste Stapel (306) im Verhältnis zur Verstellrichtung eines Zeigers in einem Stapel einem die sensiblen Daten verarbeitenden Prozeß zugeordnet wird.

2. Verfahren nach Anspruch 1, **dadurch gekennzeichnet, dass** es die Ausführung eines einzigen Prozesses umfaßt, welcher die sensiblen Daten verarbeitet.

3. Vorrichtung zum Schutz sensibler Daten gegen das Überlaufen eines Stapels (300 bis 305), mit einem reservierten Speicherplatz für einen Teil eines Programmes, **dadurch gekennzeichnet, dass** sie eine Stapelzuordnungseinrichtung in jedem Teilprogramm (106) umfaßt, die dazu ausgelegt sind, den obersten Stapel im Verhältnis zur Verstellrichtung eines Zeigers in einem Stapel einem die sensiblen Daten verarbeitenden Prozeß zuzuordnen.

4. Vorrichtung nach Anspruch 3, **dadurch gekennzeichnet, dass** sie eine Datenverarbeitungseinrichtung (106) umfaßt, die dazu ausgelegt ist, einen einzigen, die sensiblen Daten verarbeitenden Prozeß auszuführen.

5. Frankiermaschine (1), **dadurch gekennzeichnet, dass** sie eine Vorrichtung nach einem der vorhergehenden Ansprüche 3 oder 4 umfaßt.
